# EUROPEAN PATENT SPECIFICATION

(11) **EP 2 131 077 B1**
(45) Date of publication and mention of the grant of the patent: **31.08.2011**
(21) Application number: 09251470.2
(22) Date of filing: 02.06.2009
(51) Int. Cl.: F16H 63/32

(54) **Power transmission device**
Kraftübertragungsvorrichtung
Dispositif de transmission de puissance

(30) Priority: 03.06.2008 JP 2008146045
(43) Date of publication of application: 09.12.2009
(73) Proprietor: Toyota Jidosha Kabushiki Kaisha, Toyota-shi, Aichi-ken 471-8571 (JP)
(72) Inventor: Nukata, Takanori c/o Toyota Jidosha Kabushiki Kaisha., Toyota-shi, Aichi-ken, 471-8571 (JP)
(74) Representative: Albutt, Anthony John

(56) References cited:
- JP-A- 62 071 723
- JP-A- 2002 156 040
- JP-A- 2002 250 410
- JP-A- 2008 032 166

## Description

### BACKGROUND OF THE INVENTION

### 1. Field of the Invention

The invention relates to a power transmission device.

### 2. Description of the Related Art

Various proposals for a manual transmission have been made. For example, Japanese Patent Application Publication No. 2002-250410 (JP-A-2002-250410) describes a reverse mechanism of a manual transmission, which is a sliding selective transmission mechanism. When a change lever is operated to a reverse gear position so that an idle gear is engaged with a reverse second gear provided in an input shaft and a reverse third gear provided in an output shaft, rotation of the input shaft is reversed as compared to when a vehicle moves forward, and the reversed rotation is transmitted to the output shaft.

However, in the technology described in the publication No. 2002-250410, when the two members are rotated while the two members are engaged with each other, one of the members may be disengaged from the other of the members, and power may not be appropriately transmitted.
Japanese Patent Application Number 2002156040, which represents the closest prior art, discloses a device for decreasing shift operating force and restraining abrasion, in which a shift sleeve is fitted to transmission shafts moveable in the axial direction by a shift arm to switch a speed change state. The shift arm is integrally provided with a forked arm part and the shifters which are separate members from the arm part are respectively supported on the respective arm parts. The respective shifters are engaged with the outer peripheral annular groove of the shift arm and at least one shifter is energized to the shaft core side by a spring.
Furthermore said device is not provided with a ring shaped shift fork, that is disposed around the sleeve, and the urging members, which are represented by said shifters and springs, are not arranged in each of four regions (I, II, III, IV) of a plane orthogonal to the rotational axis (01), wherein the four regions (I, II, III, N) being defined by a first line (Z) that passes through the rotational axis (01) and a position at which the second gear (102, 106) contacts the third gear (105), and a second line (Y) that is orthogonal to the first line (Z) and the rotational axis (01).

### SUMMARY OF THE INVENTION

The present invention is defined in claim 1 and provides a power transmission that reduces the possibility that power is not appropriately transmitted.

A power transmission device according to an aspect of the invention includes a first gear that is rotatable around a rotational axis; a second gear that is provided away from the first gear in a direction of the rotational axis, and that includes a first gear portion and a second gear portion that is closer to the first gear than the first gear portion is; a third gear that is engaged with the first gear portion of the second gear; a ring-shaped sleeve that is engaged with the first gear, and is movable in the direction of the rotational axis, and that is selectively engaged with the second gear portion of the second gear; and an urging member that urges the sleeve in a direction opposite to a displacement direction in which the sleeve is displaced in a radial direction of the sleeve to reduce a possibility that the sleeve is displaced while the sleeve is rotated by 360 degrees.

The power transmission device further includes a shift fork that displaces the sleeve along the direction of the rotational axis. The urging member is provided in the shift fork. The shift fork has a ring shape, and is disposed around the sleeve; and a plurality of the urging members are arranged on an inner peripheral surface of the shift fork. At least one of the urging members is provided in each of four regions of a plane orthogonal to the rotational axis, wherein the four regions being defined by a first line that passes through the rotational axis and a position at which the second gear contacts the third gear, and a second line that is orthogonal to the first line and the rotational axis. The urging member includes an urging portion that presses the outer peripheral surface of the sleeve, and an elastic portion that urges the urging portion toward the outer peripheral surface of the sleeve. A plurality of the urging members may be provided along an outer peripheral surface of the sleeve. The urging member may be displaced in accordance with a change in the displacement direction in which the sleeve is displaced in the radial direction of the sleeve. With the power transmission device according to the aspect of the invention, it is possible to reduce the possibility that power is not appropriately transmitted.
The subs-claims disclose further preferred developments of the invention.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is a lateral view showing a power transmission mechanism according to an embodiment of the invention;
FIG 2 is a front view showing a shift fork that moves a sleeve in a direction of a rotational axis;
FIG 3 is a schematic diagram showing a second gear portion and the sleeve that are inclined when a first gear portion receives an axial load and a radial load from a third gear;
FIG 4 is a schematic diagram showing the engagement state of the sleeve and the second gear portion;
FIG 5 is a schematic diagram showing the engagement state of a first gear and the sleeve;
FIG 6 is a graph showing changes in a frictional force generated between the sleeve and the first gear and changes in an axial force while the sleeve is rotated by 360 degrees;
FIG 7 is a schematic diagram showing the engagement state of the sleeve and the second gear portion;
FIG 8 is a schematic diagram showing the engagement state of the first gear and the sleeve;
FIG 9 is a schematic diagram showing the second gear portion, the sleeve, and the like that are inclined;
FIG 10 is a schematic diagram showing the engagement state of the sleeve and the second gear portion;
FIG 11 is a schematic diagram showing the engagement state of the first gear and the sleeve;
FIG 12 is a schematic diagram showing the engagement state of the sleeve and the second gear portion;
FIG 13 is a schematic diagram showing the engagement state of the first gear and the sleeve.

### DETAILED DESCRIPTION OF EMBODIMENTS

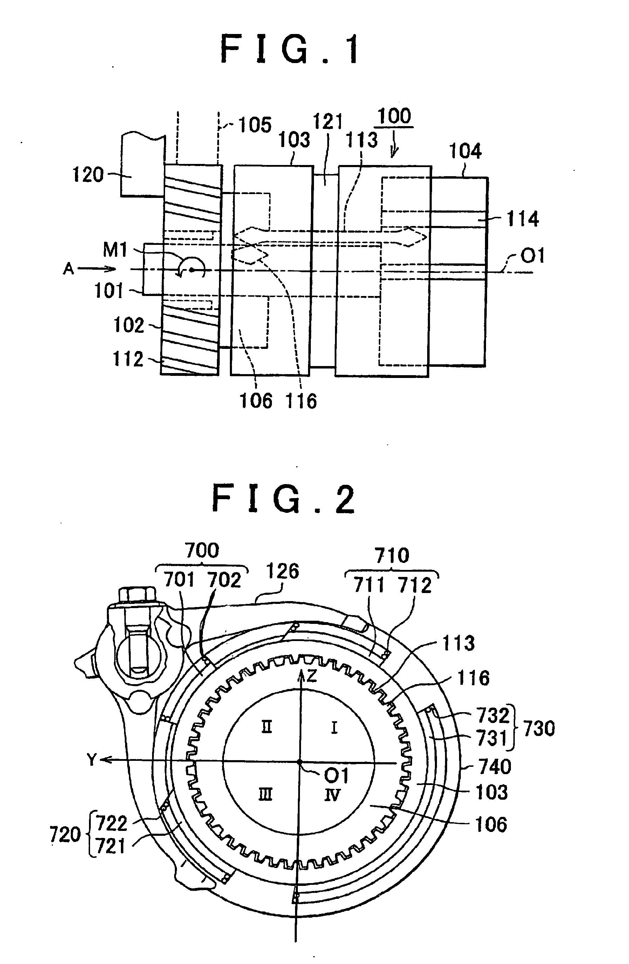

A power transmission mechanism according to an embodiment of the invention will be described with reference to FIG 1 to FIG 13. The invention is not necessarily limited to the numbers or amounts described in the following embodiments, unless otherwise specified. Also, each of constituent elements in the following embodiment is not necessarily essential to the invention, unless otherwise specified.

FIG 1 is a lateral view showing a power transmission mechanism 100 according to the embodiment of the invention. As shown in FIG 1, the power transmission mechanism 100 is, for example, a synchromesh mechanism provided in a manual transmission.

The power transmission mechanism 100 includes an input shaft 101 to which a rotational force is applied from, for example, an engine; a first gear portion 102 provided on the input shaft 101; and a second gear portion 106 that is rotatably provided on the input shaft 101 and connected to the first gear portion 102. The second gear portion 106 and the first gear portion 102 are integrated with each other to constitute one gear.

The cylindrical second gear portion 106 and the cylindrical first gear portion 102 are movable in a direction of a rotational axis O1 of the input shaft 101. The power transmission mechanism 100 further includes a first gear 104 that is provided away from the second gear portion 106 and the first gear portion 102 in the direction of the rotational axis O1, and fixed to the input shaft 101.

A plurality of teeth 112 are formed on an outer peripheral surface of the first gear portion 102. A third gear 105 is engaged with the first gear portion 102.

A plurality of teeth 116 are formed on an outer peripheral surface of the second gear portion 106. Teeth 113, which are engaged with the teeth 116 of the second gear portion 106, are formed in an inner peripheral surface of a sleeve 103. Teeth 114 are formed on an outer peripheral surface of the first gear 104. The first gear 104 and the sleeve 103 are engaged with each other. The first gear 104 is spline-fitted to the input shaft 101. The second gear portion 106 is positioned closer to the first gear 104 than the first gear portion 102 is. Further, the first gear portion 102 and the second gear portion 106 are able to idle with respect to the input shaft 101. A slight gap is formed between the outer peripheral surface of the input shaft 101 and the inner peripheral surface of each of the first gear portion 102 and the second gear portion 106.

The sleeve 103 has a cylindrical shape. A ring-shaped groove 121, which extends in a ring shape, is formed on a peripheral surface of the sleeve 103.

The sleeve 103 is movable in the direction of the rotational axis O1 while the sleeve 103 is engaged with the first gear 104.

Also, the sleeve 103 is engaged with the second gear portion 106, and disengaged from the second gear portion 106 while the sleeve 103 is engaged with the first gear 104. When the sleeve 103 is engaged with the second gear portion 106, power is transmitted between the first gear 104 and the sleeve 103, between the sleeve 103 and the first gear portion 102 (the second gear portion 106), and between the first gear portion 102 and the third gear 105.

FIG 2 is a front view showing a shift fork 126 that moves the sleeve 103 in the direction of the rotational axis O1. The shift fork 126 shown in FIG 2 is inserted in the ring-shaped groove 121 of the sleeve 103. When a driver operates a select-shift lever, the shift fork 126 is moved in the direction of the rotational axis O1. When the shift fork 126 is moved in the direction of the rotational axis O1, the sleeve 103 is also moved in the direction of the rotational axis O1.

The shift fork 126 has a ring shape. A plurality of urging mechanisms 700, 710, 720, and 730 are arranged at intervals in a circumferential direction on an inner peripheral surface of the shift fork 126. The urging mechanisms 700, 710, 720, and 730 include urging portions 701, 711, 721, and 731, respectively, and elastic members 702, 712, 722, and 732, respectively. The urging portions 701, 711, 721, and 731 press the outer peripheral surface of the sleeve 103. The elastic members 702, 712, 722, and 732 urge the urging portions 701, 711, 721, and 731, respectively, toward the outer peripheral surface of the sleeve 103.

When the sleeve 103 is displaced in a radial direction of the input shaft 101, the urging mechanism 700, 710, 720, or 730 urges the sleeve 103 in a direction opposite to the direction in which the sleeve 103 is displaced.

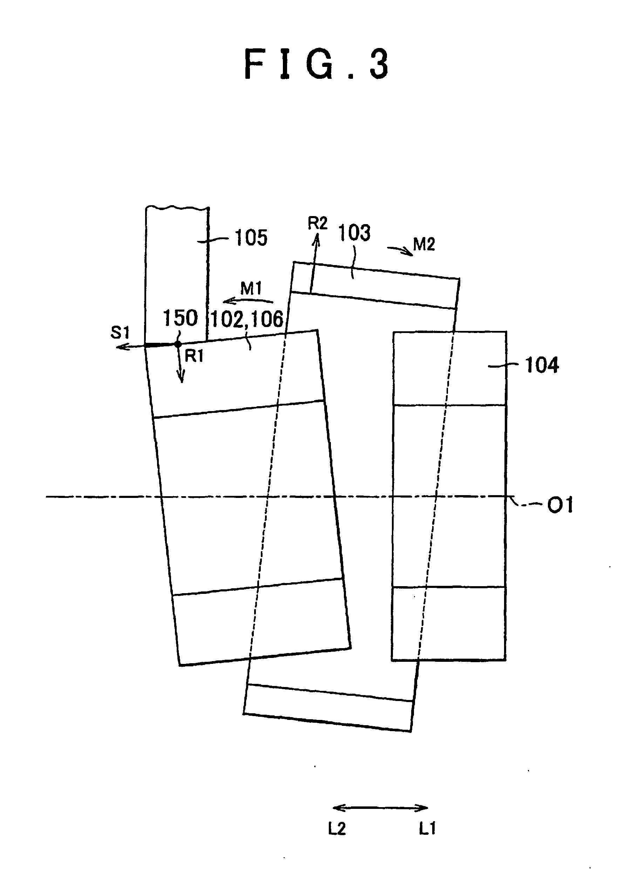

FIG 3 is a schematic diagram showing the second gear portion 106 and the sleeve 103 that are inclined when the first gear portion 102 receives an axial load S 1 and a radial load R1 from the third gear 105.

As shown in FIG 3, when the first gear portion 102 receives the axial load S1 and the radial load R1 from the third gear 105, the first gear portion 102 is rotated in a rotational direction M1 from a normal state. The sleeve 103 is rotated in a rotational direction M2 opposite to the rotational direction M1 from a normal state. Because the first gear 104 is fixed to the input shaft 101, the posture of the first gear 104 is maintained. An end portion of the second gear portion 106, which is close to the third gear 105, is inclined downward. Therefore, an end portion of the second gear portion 106, which is close to the sleeve 103, is moved upward. As a result, the sleeve 103 is pressed upward by the second gear portion 106.

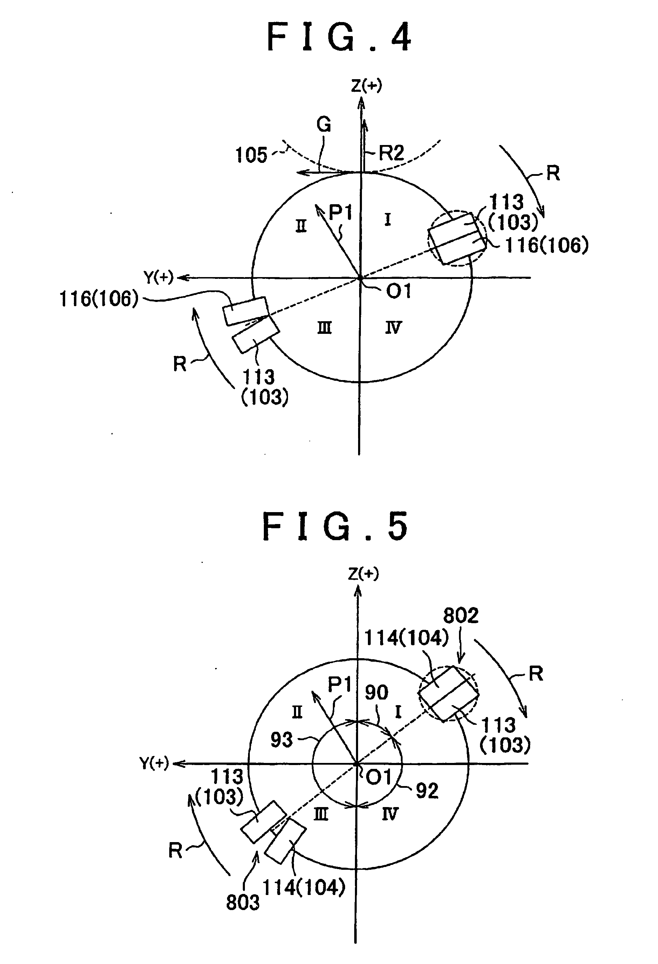

FIG 4 is a diagram showing the second gear portion 106 and the sleeve 103 seen in a direction indicated by an arrow A in FIG 1. That is, FIG 4 is a front view schematically showing the engagement state of the sleeve 103 and the second gear portion 106. FIG 5 is a diagram showing the first gear 104 and the sleeve 103 seen in the direction indicated by the arrow A. That is, FIG. 5 is a front view schematically showing the engagement state of the first gear 104 and the sleeve 103.

As shown in FIG 4 and FIG 5, a Z-axis passes through the rotational axis O1, and a position at which the third gear 105 contacts the second gear portion 106. A Y-axis is orthogonal to the Z-axis and the rotational axis 01.

A region I is positioned on the right side of the Z-axis, and is positioned closer to the third gear 105 than the Y-axis is. A region II is positioned on the left side of the region I. A region IV is positioned on the side of the Y-axis, which is opposite to the side where the region I is positioned. A region III is positioned on the side of the Y-axis, which is opposite to the side where the region II is positioned.

When the power transmission mechanism 100 is in the state shown in FIG. 4 and FIG 5, power is transmitted from the first gear 104. More specifically, power is sequentially transmitted to the sleeve 103, the second gear portion 106, the first gear portion 102, and the third gear 105 from the input shaft 101. Thus, the sleeve 103, the first gear 104, and the second gear portion 106 are rotated in a clockwise direction when seen in the direction indicated by the arrow A in FIG 1.

As shown in FIG 4, a rotational resistance G is applied to a contact portion of the second gear portion 106, which contacts the third gear 105 and the first gear portion 102. The rotational resistance G is applied in a direction opposite to the rotational direction R.

If the first gear portion 102 and the second gear portion 106 are inclined as shown in FIG 3 in this situation, the sleeve 103 is displaced so that a center point of the sleeve 103 is displaced in a displacement direction P1 from the rotational axis O1 as shown in FIG 4 and FIG. 5. That is, because the sleeve 103 receives the radial load R2 applied upward, and the rotational resistance G applied in the direction opposite to the rotational direction R, the sleeve 103 is displaced in the displacement direction P1.

If the sleeve 103 is displaced in the displacement direction P1, a perpendicular-to-surface load is generated between the sleeve 103 and the second gear portion 106. The perpendicular-to-surface load is determined by a load applied to the sleeve 103 in the direction of the rotational axis O1, a load applied to the sleeve 103 in the radial direction, and a load applied in the circumferential direction.

On the other hand, as shown in FIG. 5, if the sleeve 103 is moved so that the center point of the sleeve 103 is displaced in the displacement direction P1 from the rotational axis O1, a perpendicular-to-surface load is generated between the sleeve 103 and the first gear 104.

As a result, a region in which a surface pressure is high, and a region in which a surface pressure is low are generated between the teeth 114 of the first gear 104 and the teeth 113 of the sleeve 103. A highest surface pressure portion 802, in which the surface pressure is highest, is generated in the region I, and a lowest surface pressure portion 803, in which the surface pressure is lowest, is generated in the region III.

In FIG 3, the sleeve 103 is engaged with the second gear portion 106 in a manner such that the sleeve 103 is inclined with respect to the second gear portion 106. Therefore, while the sleeve 103 is rotated by 360 degrees, the sleeve 103 is displaced relative to the second gear portion 106 in a direction (gear disengagement direction L1) in which the sleeve 103 is disengaged from the second gear portion 106, and in a direction (gear engagement direction L2) opposite to the gear disengagement direction L1.

Because the sleeve 103 is displaced relative to the first gear portion 102 in the gear disengagement direction L1 and in the gear engagement direction L2, it is considered that an axial force F2 and a frictional force F1 from the first gear portion 102 are applied to the sleeve 103.

While the sleeve 103 is rotated by 360 degrees, the sleeve 103 is movable in the gear disengagement direction L1 or the gear engagement direction L2, in a region in which the frictional force F1 is balanced with the axial direction F2.

If the sleeve 103 is displaced in the displacement direction P1, a region, in which the surface pressure between the teeth 114 of the first gear 104 and the teeth 113 of the sleeve 103 is increased, and the frictional F1 is larger than the axial direction F2, is generated.

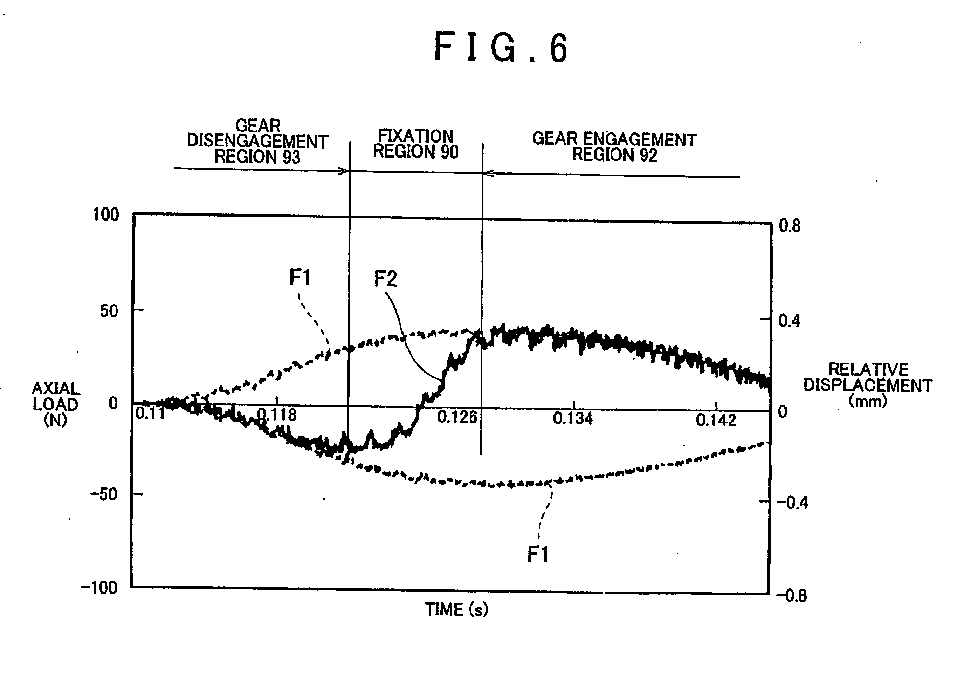

FIG 6 is a graph showing changes in the frictional force F1 generated between the sleeve 103 and the first gear 104 and changes in the axial force F2 while the sleeve 103 is rotated by 360 degrees.

As shown in FIG 6, a gear disengagement region 93, a gear engagement region 92, and a fixation region 90 are generated. In the gear disengagement region 93 and the gear engagement region 92, the absolute value of the axial force F2 is equal to the absolute value of the frictional force F1. In the fixation region 90, the absolute value of the axial force F2 is smaller than the absolute value of the frictional force F1.

In the fixation region 90 in which the absolute value of the axial force F2 is smaller than the absolute value of the frictional force F1, the sleeve 103 cannot be displaced in the gear disengagement direction L1 or the gear engagement direction L2.

In FIG 5, while the sleeve 103 is rotated by 360 degrees, the fixation region 90 is generated to extend in the direction opposite to the rotational direction R from the highest surface pressure portion 802 to the Z-axis. The gear engagement region 92, in which the sleeve 103 is displaced in the gear engagement direction L2, is generated to extend in the rotational direction R from the highest surface pressure portion 802 to the Z-axis. Further, the gear disengagement region 93, in which the sleeve 103 is displaced in the gear disengagement direction L1, is generated to extend over the region II and the region III.

Thus, the fixation region 90 and the gear engagement region 92 are positioned in the region I and the region IV Because the fixation region 90 is positioned in the region I, the gear engagement region 92 is smaller than the gear disengagement region 93. Therefore, while the sleeve 103 is rotated by 360 degrees, the sleeve 103 is displaced in the gear disengagement direction L1, that is, the sleeve 103 is displaced in the direction in which the sleeve 103 is disengaged from the second gear portion 106.

On the other hand, the power transmission mechanism 100 according to the embodiment includes the shift fork 126. Even if the sleeve 103 is displaced in the displacement direction P1, the urging mechanism 700 of the shift fork 126 urges the sleeve 103 in the direction opposite to the displacement direction P1.

This reduces the possibility that the region, in which the surface pressure is increased, is generated between the sleeve 103 and the first gear 104. Thus, it is possible to suppress an increase in the frictional force F1. Accordingly, it is possible to reduce the possibility that the fixation region 90 is generated between the sleeve 103 and the first gear 104. Thus, it is possible to reduce the possibility that the sleeve 103 is disengaged from the second gear portion 106. That is, it is possible to reduce the possibility that so-called gear disengagement occurs.

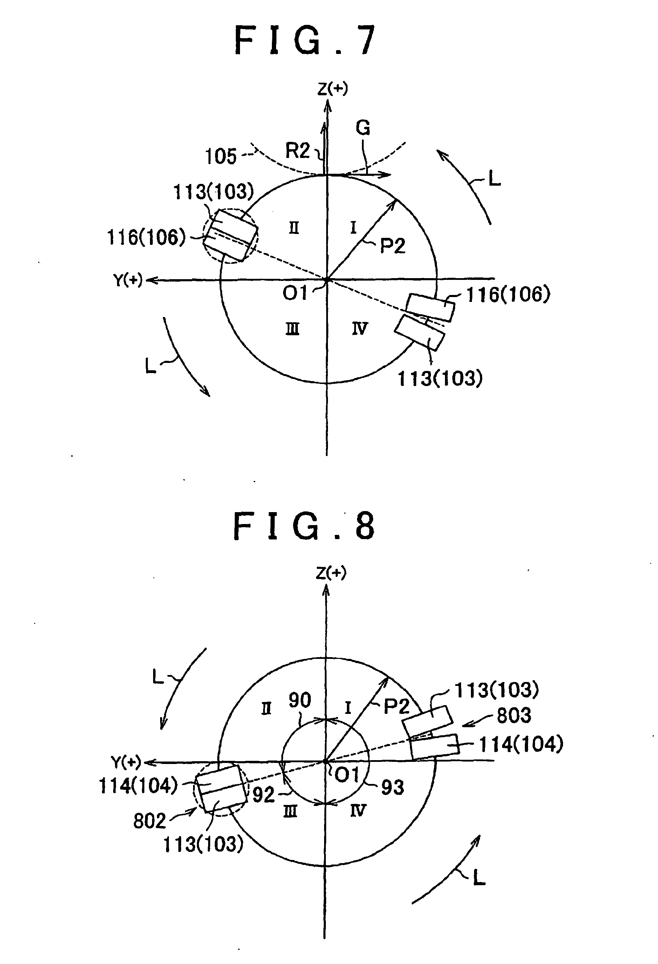

FIG 7 is a schematic diagram showing the engagement state of the sleeve 103 and the second gear portion 106. FIG 8 is schematic diagram showing the engagement state of the sleeve 103 and the first gear 104.

In FIG 7 and FIG 8, power is transmitted from the first gear 104 to the sleeve 103, and power is transmitted from the sleeve 103 to the first gear portion 102. The sleeve 103, the second gear portion 106, and the first gear 104 are rotated in the counterclockwise direction when seen in the direction indicated by the arrow A.

Therefore, the rotational resistance G generated between the third gear 105 and the second gear portion 106 is applied to the second gear portion 106 in a direction opposite to a rotational direction L. If the second gear portion 106 is inclined as shown in FIG 3 in this situation, the sleeve 103 is displaced so that the center point of the sleeve 103 is displaced in a displacement direction P2 from the rotational axis O1. That is, because the sleeve 103 receives the radial load R2 applied upward and the rotational resistance G applied in the direction opposite to the rotational direction L, the sleeve 103 is displaced in the displacement direction P2.

If the sleeve 103 is displaced in the above-described manner, the highest surface pressure portion 802 generated between the teeth 113 of the sleeve 103 and the teeth 114 of the first gear 104 is positioned in the region III as shown in FIG 8. The lowest surface pressure portion 803 is generated in the region I.

The fixation region 90 is generated to extend in the direction opposite to the rotational direction L (i.e., the counterclockwise direction) from the highest surface pressure portion 802 to the Z-axis.

The gear engagement region 92 is generated to extend in the rotational direction L from the highest surface pressure portion 802 to the Z-axis. The gear disengagement region 93 is generated to extend over the region IV and the region I.

As shown in FIG 8, the gear engagement region 92 is smaller than the gear disengagement region 93. Therefore, while the sleeve 103 is rotated by 360 degrees, the sleeve 103 is slightly moved in the gear disengagement direction L1.

On the other hand, even if the sleeve 103 is displaced in the displacement direction P2, because the urging mechanism 710 of the shift fork 126 urges the sleeve 103 in the direction opposite to the displacement direction P2, it is possible to suppress an increase in the surface pressure between the sleeve 103 and the first gear 104. This reduces the possibility that the fixation region 90 is generated, and the possibility that the gear disengagement occurs.

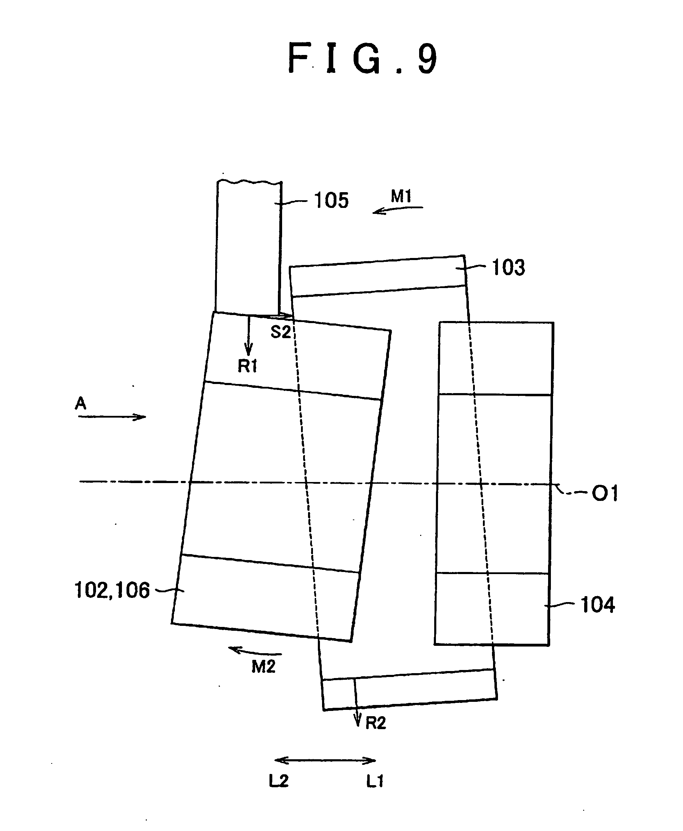

FIG 9 is a schematic diagram showing the second gear portion 106, the sleeve 103, and the like that are inclined when an axial load S2 and the radial direction R1 are applied to the first gear portion 102 from the third gear 105.

As shown in FIG 9, when the first gear portion 102 receives the axial load S2 and the radial load R1 from the third gear 105, the first gear portion 102 is rotated in the rotational direction M2 from the normal state. The sleeve 103 is rotated in the direction (the rotational direction M1) opposite to the rotational direction M2 from the normal state. Because the first gear 104 is fixed to the input shaft 101, the posture of the first gear 104 is maintained. An end portion of the second gear portion 106, which is close to the third gear 105, is displaced upward, and an end portion of the second gear portion 106, which is close to the sleeve 103, is displaced downward. As a result, the sleeve 103 receives the radial load R2 applied downward from the second gear portion 106.

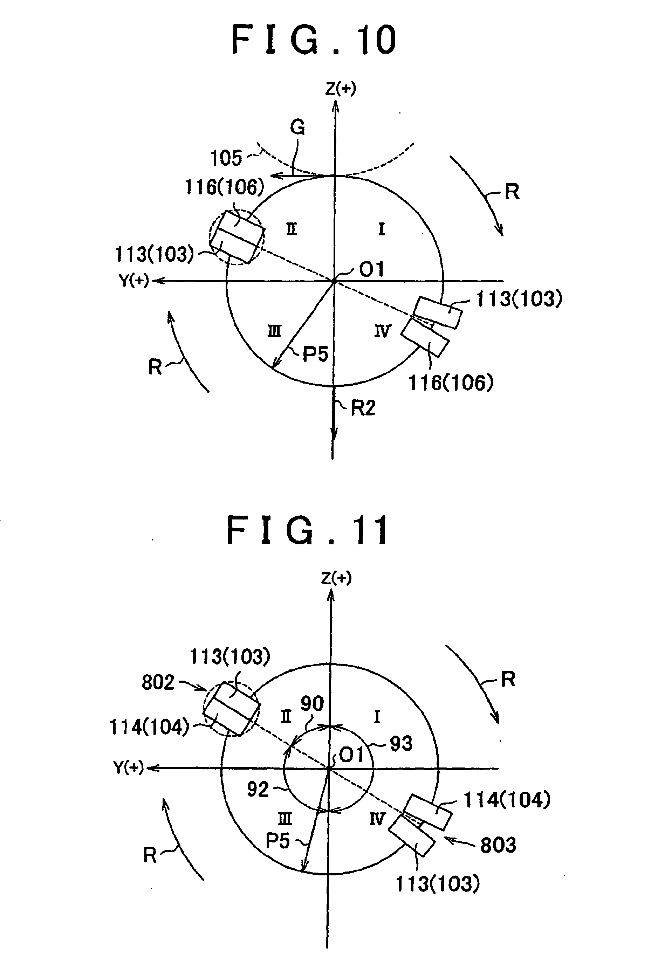

FIG 10 is a diagram showing the second gear portion 106 and the sleeve 103 seen in the direction indicated by the arrow A in FIG 9. That is, FIG 10 is a front view schematically showing the engagement state of the second gear portion 106 and the sleeve 103. FIG 11 is a schematic diagram showing the engagement state of the sleeve 103 and the first gear 104, when the sleeve 103 is in the state shown in FIG 10.

In FIG 9 and FIG 10, power is transmitted from the first gear 104 to the sleeve 103 and the second gear portion 106. The sleeve 103 and the second gear portion 106 are rotated in the clockwise direction when seen in the direction indicated by the arrow A.

The rotational resistance G is applied to a contact portion of the first gear portion 102, which contacts the third gear 105. The rotational resistance G is applied in the direction opposite to the rotational direction R. If the second gear portion 106 is inclined as shown in FIG 9 in this situation, the sleeve 103 is displaced so that the center point of the sleeve 103 is displaced in a displacement direction P5 from the rotational axis O1. That is, because the sleeve 103 receives the radial load R2 applied downward, and the rotational resistance G applied in the direction opposite to the rotational direction R, the sleeve 103 is displaced in the displacement direction P5.

If the sleeve 103 is displaced in the above-described manner, the region, in which the surface pressure is increased, is generated between the first gear 104 and the sleeve 103. The highest surface pressure portion 802 is generated in the region II, and the lowest surface pressure portion 803 is generated in the region IV.

Accordingly, as shown in FIG 11, the fixation region 90 is generated to extend in the rotational direction R from the highest surface pressure portion 802 to the Z-axis. The gear engagement region 92 is generated to extend in the direction opposite to the rotational direction R from the highest surface pressure portion 802 to the Z-axis. The gear disengagement region 93 is generated to extend over the region I and the region IV Thus, the gear disengagement region 93 is larger than the gear engagement region 92. Therefore, while the sleeve 103 is rotated by 360 degrees, the sleeve 103 is displaced in the gear disengagement direction L1.

On the other hand, the shift fork 126 shown in FIG 2 includes the urging mechanism 720. If the sleeve 103 is displaced in the displacement direction P5, the urging mechanism 720 urges the sleeve 103 in the direction opposite to the displacement direction P5. This reduces the possibility that the region, in which the surface pressure is increased, is generated between the teeth 113 of the sleeve 103 and the teeth 114 of the first gear 104. Accordingly, it is possible to reduce the possibility that the fixation region 90 is generated.

Thus, it is possible to reduce the possibility that the sleeve 103 is disengaged from the second gear portion 106.

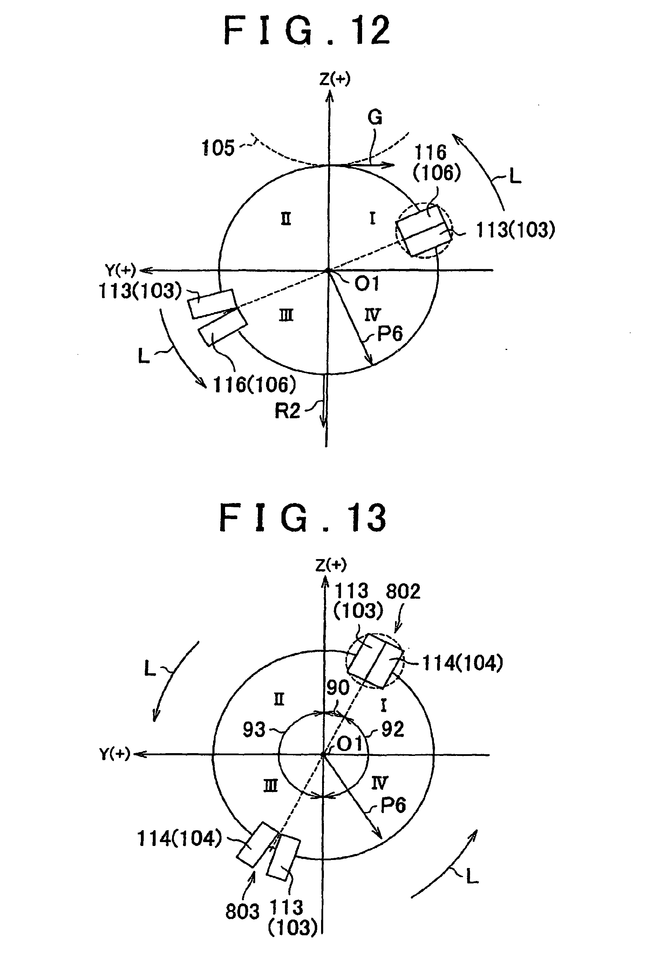

FIG 12 is a diagram showing the second gear portion 106 and the sleeve 103 seen in a direction indicated by the arrow A in FIG 9. That is, FIG 12 is a front view schematically showing the engagement state of the sleeve 103 and the second gear portion 106. FIG 13 is a schematic diagram showing the engagement state of the sleeve 103 and the first gear 104 when the sleeve 103 is in the state shown in FIG 12. In FIG 12 and FIG. 13, power is transmitted from the first gear 104 to the sleeve 103 and the second gear portion 106. The sleeve 103 and the second gear portion 106 are rotated in the counterclockwise direction when seen in the direction indicated by the arrow A.

The rotational resistance G is applied to the contact portion of the first gear portion 102, which contacts the third gear 105. The rotational resistance G is applied in a direction opposite to the rotational direction L. If the second gear portion 106 is inclined as shown in FIG 9 in this situation, the sleeve 103 is displaced so that the center point of the sleeve 103 is displaced in a displacement direction P6 from the rotational axis O1. That is, because the sleeve 103 receives the radial load R2 applied downward, and the rotational resistance G applied in the direction opposite to the rotational direction L, the sleeve 103 is displaced in the displacement direction P6.

If the sleeve 103 is displaced in the above-described manner, the region, in which the surface pressure is high, is generated between the sleeve 103 and the first gear 104. The highest surface pressure portion 802 is generated in the region I, and the lowest surface pressure portion 803 is generated in the region III.

Accordingly, the fixation region 90 is generated to extend in the rotational direction L from the highest surface pressure portion 802 to the Z-axis. The gear engagement region 92 is generated to extend in the direction opposite to the rotational direction L from the highest surface pressure portion 802 to the Z-axis. The gear disengagement region 93 is generated to extend over the region II and the region III.

While the sleeve 103 is rotated by 360 degrees, the gear disengagement region 93 is larger than the gear engagement region 92. Therefore, while the sleeve 103 is rotated by 360 degrees, the sleeve 103 is displaced in the gear disengagement direction L1.

On the other hand, when the sleeve 103 is displaced in the displacement direction P6, the urging mechanism 730 of the shift fork 126 shown in FIG 2 urges the sleeve 103 in the direction opposite to the displacement direction P6. This reduces the possibility that the sleeve 103 is displaced, and the possibility that the region, in which the surface pressure is high, is generated between the sleeve 103 and the first gear 104. Thus, it is possible to reduce the possibility that the fixation region 90 is generated. Accordingly, it is possible to reduce the possibility that the sleeve 103 is displaced in the gear disengagement direction L1 while the sleeve 103 is rotated by 360 degrees.

Thus, the embodiment of the invention that has been disclosed in the specification is to be considered in all respects as illustrative and not restrictive. The technical scope of the invention is defined by claims, and all changes which come within the meaning and range of equivalency of the claims are therefore intended to be embraced therein. Further, all of the above-described values are examples, and the invention is not limited to the above-described values or ranges.

The invention is appropriately applied to a power transmission mechanism. More specifically, the invention is appropriately applied to a synchronization mechanism such as a synchromesh mechanism of a manual transmission.

## Claims

1. A power transmission device **characterized by** comprising:
a first gear (104) that is rotatable around a rotational axis (O1);
a second gear (102, 106) that is provided away from the first gear (104) in a direction of the rotational axis (01), and that includes a first gear portion (102) and a second gear portion (106) that is closer to the first gear (104) than the first gear portion (102) is;
a third gear (105) that is engaged with the first gear portion (102) of the second gear (102, 106);
a ring-shaped sleeve (103) that is engaged with the first gear (104), and is movable in the direction of the rotational axis (O1), and that is selectively engaged with the second gear portion (106) of the second gear (102, 106);
an urging member (700, 710, 720, 730) that urges the sleeve (103) in a direction opposite to a displacement direction (P1; P2; P5; P6) in which the sleeve (103) is displaced in a radial direction of the sleeve (103) to reduce the possibility that the sleeve (103) is displaced while the sleeve (103) is rotated by 360 degrees; and
a shift fork (126) that displaces the sleeve (103) along the direction of the rotational axis (O1), wherein the urging member (700, 710, 720, 730) is provided in the shift fork (126)
wherein the shift fork (126) has a ring shape, and the shift fork (126) is disposed around the sleeve (103); and a plurality of the urging members (700, 710, 720, 730) are arranged on an inner peripheral surface of the shift fork (126);
wherein at least one of the urging members (700, 710, 720, 730) is provided in each of four regions (I, II, III, IV) of a plane orthogonal to the rotational axis (O1), wherein the four regions (I, II, III, IV) being defined by a first line (Z) that passes through the rotational axis (O1) and a position at which the second gear (102, 106) contacts the third gear (105), and a second line (Y) that is orthogonal to the first line (Z) and the rotational axis (O1); and
wherein the urging member (700, 710, 720, 730) includes an urging portion (701, 711, 721, 731) that presses the outer peripheral surface of the sleeve (103), and an elastic portion (702, 712, 722, 732) that urges the urging portion (701, 711, 721, 731) toward the outer peripheral surface of the sleeve (103).

2. The power transmission device according to claim 1 wherein a plurality of the urging members (700, 710, 720, 730) are provided along an outer peripheral surface of the sleeve (103).

3. The power transmission device according to any one of claims 1 or 2
wherein the urging member (700, 710, 720, 730) is displaced in accordance with a change in the displacement direction (P1; P2; P5; P6) in which the sleeve (103) is displaced in the radial direction of the sleeve (103).

## Patentansprüche

1. Kraftübertragungsvorrichtung, **dadurch gekennzeichnet, dass** sie aufweist:
ein erstes Zahnrad (104), das um eine Rotationsachse (O1) drehbar ist;
ein zweites Zahnrad (102, 106), das von dem ersten Zahnrad (104) in Richtung der Rotationsachse (O1) entfernt angeordnet ist, und das einen ersten Zahnradabschnitt (102) und einen zweiten Zahnradabschnitt (106) beinhaltet, der dem ersten Zahnrad (104) näher ist als der erste Zahnradabschnitt (102);
ein drittes Zahnrad (105), das mit dem ersten Zahnradabschnitt (102) des zweiten Zahnrads (102, 106) verbunden ist;
eine ringförmige Hülse (103), die mit dem ersten Zahnrad (104) verbunden ist, und die in Richtung der Rotationsachse (O1) beweglich ist, und die mit dem zweiten Zahnradabschnitt (1.06) des zweiten Zahnrads (102, 106) selektiv verbunden ist;
ein Zwangsbewegungselement (700, 710, 720, 730), das die Hülse (103) unter Zwang in eine zu einer Verschiebungsrichtung (P1; P2; P5; P6) entgegengesetzten Richtung bewegt, in der die Hülse (103) in einer radialen Richtung der Hülse (103) verschoben wird, um die Wahrscheinlichkeit zu verringern, dass die Hülse (103) verschoben wird, während die Hülse (103) um 360 Grad gedreht wird; und
eine Schaltgabel (126), die die Hülse (103) entlang der Richtung der Rotationsachse (O1) verschiebt, wobei das Zwangsbewegungselement (700, 710, 720, 730) in der Schaltgabel (126) vorgesehen ist,
wobei die Schaltgabel (126) eine Ringform aufweist, und die Schaltgabel (126) um die Hülse (103) angeordnet ist; und eine Mehrzahl der Zwangsbewegungselement (700, 710, 720, 730) auf einer inneren Umfangsoberfläche der Schaltgabel (126) angeordnet sind;
wobei zumindest eines der Zwangsbewegungselemente (700, 710, 720, 730) in einem jeden von vier Bereichen (I, II, III, IV) von einer Ebene orthogonal zu der Rotationsachse (O1) vorgesehen ist,
wobei die vier Bereiche (I, II, III, IV) durch eine erste Linie (Z), die durch die Rotationsachse (O1) und eine Position verläuft, an der das zweite Zahnrad (102, 106) das dritte Zahnrad (105) kontaktiert, und eine zweite Linie (Y) definiert sind, die orthogonal zu der ersten Linie (Z) und der Rotationsachse (O1) ist; und
wobei das Zwangsbewegungselement (700, 710, 720, 730) einen Zwangsbewegungsabschnitt (701, 711, 721, 731), der die äußere Umfangsoberfläche der Hülse (103) zusammendrückt, und einen elastischen Bereich (702, 712, 722, 732) beinhaltet, der das Zwangsbewegungselement (701, 711, 721, 731) unter Zwang in Richtung der äußeren Umfangsoberfläche der Hülse (103) bewegt.

2. Kraftübertragungsvorrichtung nach Anspruch 1, wobei eine Mehrzahl von Zwangsbewegungselementen (700, 710, 720, 730) entlang einer äußeren Umfangsoberfläche der Hülse (103) angeordnet sind.

3. Kraftübertragungsvorrichtung nach einem der Ansprüche 1 bis 2, wobei das Zwangsbewegungselement (700, 710, 720, 730) einer Änderung entsprechend in der Verschiebungsrichtung (P1; P2; P5; P6) verschoben wird, in der die Hülse (103) in der radialen Richtung der Hülse (103) verschoben wird.

## Revendications

1. Dispositif de transmission de puissance **caractérisé en ce qu'**il comprend :
un premier engrenage (104) qui peut tourner autour d'un axe de rotation (O1);
un deuxième engrenage (102, 106) qui est disposé à l'écart du premier engrenage (104) dans la direction de l'axe de rotation (01) et qui comprend une première partie d'engrenage (102) et une deuxième partie d'engrenage (106) qui est plus proche du premier engrenage (104) que de la première partie d'engrenage (102) ;
un troisième engrenage (105) qui est mis en prise avec la première partie d'engrenage (102) du deuxième engrenage (102, 106) ;
un manchon de forme annulaire (103) qui est mis en prise avec le premier engrenage (104) et qui est mobile dans la direction de l'axe de rotation (O1), et qui est mis en prise de manière sélectivement avec la deuxième partie d'engrenage (106) du deuxième engrenage (102, 106) ;
un élément de poussée (700, 710, 720, 730) qui pousse le manchon (103) dans une direction opposée à une direction de déplacement (P1 ; P2 ; P5 ; P6) dans laquelle le manchon (103) est déplacé dans une direction radiale du manchon (103) de façon à réduire la possibilité que le manchon (103) se déplace pendant que le manchon (103) est tourné de 360 degrés ; et
une fourchette (126) qui déplace le manchon (103) le long de la direction de l'axe de rotation (O1), dans lequel l'élément de poussée (700, 710, 720, 730) est disposé dans la fourchette (126) ;
dans lequel la fourchette (126) présente une forme annulaire et la fourchette (126) est disposée autour du manchon (103) ; et une pluralité d'éléments de poussée (700, 710, 720, 730) sont agencés sur une surface périphérique intérieure de la fourchette (126) ;
dans lequel l'un au moins des éléments de poussée (700, 710, 720, 730) est disposé dans chacune de quatre régions (I, II, III, IV) d'un plan orthogonal à l'axe de rotation (O1), dans lequel les quatre régions (I, II, III, IV) sont définies par une première ligne (Z) qui passe par l'axe de rotation (O1) et par une position où le deuxième engrenage (102, 106) entre en contact avec le troisième engrenage (105) et par une deuxième ligne (Y) qui est orthogonale à la première ligne (Z) et à l'axe de rotation (O1) ; et
dans lequel l'élément de poussée (700, 710, 720, 730) comprend une partie de poussée (701, 711, 721, 731) qui appuie sur la surface périphérique extérieure du manchon (103) et une partie élastique (702, 712, 722, 732) qui pousse la partie de poussée (701, 711, 721, 731) vers la surface périphérique extérieure du manchon (103).

2. Dispositif de transmission de puissance selon la revendication 1, dans lequel une pluralité d'éléments de poussée (700, 710, 720, 730) sont disposés le long d'une surface périphérique extérieure du manchon (103).

3. Dispositif de transmission de puissance selon l'une quelconque des revendications 1 ou 2, dans lequel l'élément de poussée (700, 710, 720, 730) est déplacé selon un changement de la direction de déplacement (P1; P2 ; P5 ; P6) où le manchon (103) est déplacé dans la direction radiale du manchon (103).
